# EUROPEAN PATENT APPLICATION

(11) **EP 3 896 123 A1**
(43) Date of publication of application: **20.10.2021**
(21) Application number: 21169369.2
(22) Date of filing: 26.10.2016
(51) Int. Cl.: C08J 5/24, C08B 31/00, C08K 5/00, C08L 3/04, C08K 5/101, C08K 5/3412

(54) **IMPROVED BINDER COMPOSITIONS AND USES THEREOF**

(30) Priority: 30.10.2015 GB 201519187
(62) Divisional of application: 16788082.2
(71) Applicant: Knauf Insulation SPRL, 4600 Visé (BE)
(72) Inventor: HAMPSON, Carl, St Helens, WA 10 3 NS (GB); KHAN, Ferdous, St Helens, WA 10 3 NS (GB)
(74) Representative: ARC-IP

(57) **Abstract**

The present invention relates to an assembly of matter comprising mineral fibers, synthetic fibers or natural fibers, cellulosic particle or sheet material, bonded together by a curable binder composition comprising a monosaccharide and/or polysaccharide and an azetidinium crosslinker and possibly reaction product resulting from the cross-linking between polysaccharide and azetidinium crosslinker, or by a binder obtained by subjecting to curing conditions an aqueous curable binder composition comprising a monosaccharide and/or polysaccharide and an azetidinium crosslinker and possibly reaction product resulting from the cross-linking between polysaccharide and azetidinium crosslinker. The binder composition may further comprise a crosslinker capable of undergoing radical polymerization. Binder compositions and a process for manufacturing said assembly of matter are also disclosed..

## Description

The present invention relates to new improved binder compositions, more specifically curable binder compositions for use in manufacturing products from a collection of non or loosely assembled matter. For example, these binder compositions may be employed to fabricate fiber products which may be made from woven or nonwoven fibers. In one illustrative embodiment, the binder compositions are used to bind glass fibers to make fiberglass. In another illustrative embodiment, the binder compositions are used to bind mineral wool fibers, such as glass wool or stone wool in a matted layer, such as an insulating product. In a further embodiment, the binders are used to fabricate, for example, wood fiber board, particle board or oriented strand board (OSB), which has desirable physical properties (e.g., mechanical strength). Further, the binders may be used to assemble sheets of cellulosic material, such as sheets of wood to manufacture plywood. The invention further extends to a process for using said binder compositions to bound loosely assembled matter, and to a product made from loosely assembled matter bound by a binder of the invention.

Several formaldehyde-free binder compositions have been developed in recent times. One such curable binder composition involves sustainable materials and is based on polyester chemistry, more particularly curable aqueous binder compositions comprising a polyacid component or anhydride or salt derivatives thereof, and a polyhydroxy component, possibly together with a silicon containing compound. Another such composition involves the condensation of ammonium salt of inorganic acids or of polycarboxylic acids or an amine, preferably a polyamine, with reducing sugars as thermosets. These chemistries show advantages as compared to prior formaldehyde based technology, but lead to cured resins that show a coloration which may not be desirable in certain applications. Thus, there still is a need for improved binder chemistry. There further is an ongoing interest in improving the bond strength of the employed binder compositions, hence providing improved final products, showing improved properties, and/or final products with reduced binder content, at more advantageous costs.

The present invention seeks to provide an assembly of matter, including mineral fibers, synthetic fibers and natural fibers, cellulosic particle or sheet material, showing improved properties, including less undesirable coloration and possibly improved mechanical properties.

Another objective of the present invention is to provide a process for the preparation of an assembly of matter as defined here above.

Another objective of the present invention is to provide a cost-effective process suitable for large volume production.

Another objective is to provide an improved binder composition based on renewable and/or sustainable resources.

Further, the invention seeks to provide binder compositions that rapidly cure into strong binders.

The present invention now provides a product, a process and binder composition as per the attached claims.

The product of the invention consists in an assembly of matter comprising mineral fibers, synthetic fibers or natural fibers, cellulosic particle or sheet material, bonded together by a binder obtained by subjecting to curing conditions an aqueous curable binder composition comprising a monosaccharide or polysaccharide and an azetidinium crosslinker. The said binder composition may also comprise some reaction product resulting from the cross-linking between saccharide and azetidinium crosslinker.

The monosaccharide may advantageously be a 5 carbon or a 6 carbon monosaccharide, preferably dextrose. The polysaccharide comprises at least two, preferably at least 4 saccharide units and up to 10⁶ saccharide units, preferably up to 10000 saccharide units, more preferably up to 5000 or even 3000 saccharide units. It may advantageously be selected from native starch and starch derivatives. Starch comprises two different polymers of D-glucopyranose, amylose and amylopectin. Amylose is a linear polysaccharide, while amylopectin is a highly branched polysaccharide. Amylose has a relatively low molecular weight with a degree of polymerisation ranging from 1000 to 10000 glucose units and a M_{w} > 10⁶ g/mol, whereas amylopectin is a larger branched polysaccharide with a degree of polymerisation beyond 10⁵ and a M_{w} > 10⁷ g/mol. Starch derivatives include but are not limited to starch ethers such as carboxymethyl starches, hydroxyalkyl starches, cationic starches, amphoteric starches, starch esters such as starch acetates, starch phosphates, starch octenyl succinate, acid modified starch, oxide modified starch, and partially hydrolysed starch, including but not limited to dextrins. Polysaccharides may also be derived from cellulose or other natural or synthetic sources, like chitin for instance. Starch derivatives include dextrins and maltodextrins which are composed of D-glucose units linked in chains of variable lengths comprising from 2 to 20 glucose units.

Azetidinium crosslinkers are known in the art. Multifunctional azetidinium crosslinker may be made using different coupling agents and amine functional monomer with different ratios, containing at least one substituted or unsubstituted four membered nitrogen containing heterocycle. The azetidinium group is chemically bonded with a homopolymer or a copolymer chain, comprising one or more non-azetidinium monomer units incorporated into the polymer structure. A preferred azetidinium-based material suitable for use comprises at least two-azetidinium groups in the chain. A preferred azetidinium polymer in accordance with the invention shows the general structure below: 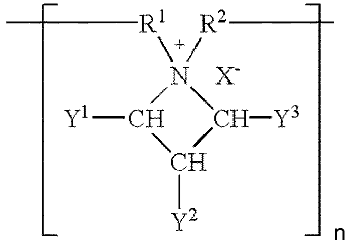 Wherein n is an integer, generally n≥1, R₁ may be C₁ - C₂₅ alkanediyl, preferably C₁ - C₁₀ alkanediyl or C₁ - C₅ alkanediyl, possibly substituted with a hydroxyl group, carboxyl functional group or an amine,
R₂ may be independently R1 or-R₃-NH-C(O)-R4-, with R₃ and R₄ being independently C₁ - C₂₅ alkanediyl, preferably C₁ - C₁₀ alkanediyl or C₁ - C₅ alkanediyl,
Y₁ and Y₃ being H or a C1-C5 alkyl group, possibly substituted with a hydroxyl group, an amine or a carboxyl group,
Y2 being OH or independently Y1,
X⁻ being a halogen counter ion.

Azetidinium functionalized polymers have highly reactive quaternary ammonium groups, which may improve the properties of the final product, and may provide antimicrobial activity due to the presence of the cationic azetidinium groups. Azetidinium functional groups are reactive due to the angle strain and can react with a number of nucleophiles Azetidinium crosslinkers may polymerize at elevated temperature and/or by radical initiation.

In an advantageous embodiment, the weight ratio on a dry basis of monosaccharide and/or polysaccharide to azetidinium crosslinker is comprised between 99/1 to 60/40, preferably between 98/2 to 70/30, more preferably between 95/5 to 75/25.

It has been found that when an aqueous binder composition as defined above is applied on a glass fiber veil, it shows high bond strength upon curing, even after weathering. The loss of bond strength after weathering is significantly reduced as compared to prior art thermoset binders.

The bond strength of a veil product bonded with invention binder compositions may be slightly affected by the pH of the composition, notably at lower relative azetidinium content. More particularly, alkaline pH of the binder composition has a tendency to slightly reduce the bond strength (dry and wet) while acidic pH pushes the bond strength up, at higher starch/azetidinium ratios.

According to a preferred embodiment, the aqueous binder composition comprises mono- and/or polysaccharide cross-linked by azetidinium crosslinker and further comprises a cross-linker capable of undergoing free radical polymerization. Such crosslinker may be selected from polycarboxylic acid, acrylamides and methacrylamides, acrylates, acrylic acids and their salts, acrylonitrile, bisphenol acrylics, carbohydrate monomers, fluorinated acrylics, maleimide, polyfunctional acrylics, and mixtures thereof. In the event free radical polymerization is to be initiated by free radical initiator, the composition may further comprise one or more free radical initiator for initiation of further cross-linking reactions between saccharide residues and the cross-linker. Such reaction mechanisms are well known in the art. The reaction may be initiated by provision of energy, including heat and/or appropriate radiation. Upon curing, such binder composition produces a highly cross-linked resin which confers further improved bond strength to the assembly of matter in accordance with the invention. It has been found that a two stage polymerization comprising a second step consisting in free radical polymerization provides a highly polymerized resin showing a high polymerization density. Such resins confer high bond strength to substrates such fibers and cellulosic particulate or sheet materials.

The binder compositions of the invention appear particularly suitable for bonding fibers and cellulosic particulate or sheet materials, as the curing liberates few or no water, hence reducing the energy required for evaporation of water contained in the final product.

The polycarboxylic acid may advantageously be selected from monomeric and polymeric polycarboxylic acids. Illustratively, a monomeric polycarboxylic acid may be a dicarboxylic acid, including, but not limited to, unsaturated aliphatic dicarboxylic acids, saturated aliphatic dicarboxylic acids, aromatic dicarboxylic acids, unsaturated cyclic dicarboxylic acids, saturated cyclic dicarboxylic acids, optionally substituted, such as with hydroxy, halo, amino, alkyl, carboxy, alkoxy, anhydrides, salt, esters and mixtures thereof. Advantageously, the monomeric polycarboxylic acid is selected from malic acid, glutamic acid, glutaconic acid, 3-fumarylpyruvic acid, 2,5-furandicarboxylic acid, mesaconic acid, mesoxalic acid, glutaric acid, nedocromil, 4-(gamma-glutamylamino)butanoic acid, neoglutyl, and succinic acid. Other suitable polycarboxylic acids are contemplated to include, but are not limited to, aconitic acid, adipic acid, azelaic acid, butane tetracarboxylic acid dihydride, butane tricarboxylic acid, chlorendic acid, citraconic acid, dicyclopentadiene-maleic acid adducts, diethylenetriamine pentaacetic acid, adducts of dipentene and maleic acid, ethylenediamine tetraacetic acid (EDTA), fully maleated rosin, maleated tall-oil fatty acids, fumaric acid, glutaric acid, isophthalic acid, itaconic acid, maleated rosin oxidized with potassium peroxide to alcohol then carboxylic acid, maleic acid, malic acid, mesaconic acid, biphenol A or bisphenol F reacted via the KOLBE-Schmidt reaction with carbon dioxide to introduce 3-4 carboxyl groups, oxalic acid, phthalic acid, sebacic acid, succinic acid, tartaric acid, terephthalic acid, tetrabromophthalic acid, tetrachlorophthalic acid, tetrahydrophthalic acid, trimellitic acid, trimesic acid, and the like, and anhydrides, and combinations thereof. Illustratively, a polymeric polycarboxylic acid may be an acid, for example, polyacrylic acid, polymethacrylic acid, polymaleic acid, and like polymeric polycarboxylic acids, copolymers thereof, anhydrides thereof, and mixtures thereof. Examples of commercially available polyacrylic acids include AQUASET-529 (Rohm & Haas, Philadelphia, PA, USA), CRITERION 2000 (Kemira, Helsinki, Finland, Europe), NF1 (H.B. Fuller, St. Paul, MN, USA), and SOKALAN (BASF, Ludwigshafen, Germany, Europe) which is a water-soluble polyacrylic copolymer of acrylic acid and maleic acid, having a molecular weight of approximately 4000. AQUASET- 529 is a composition containing polyacrylic acid cross-linked with glycerol, also containing sodium hypophosphite as a catalyst. CRITERION 2000 is an acidic solution of a partial salt of polyacrylic acid, having a molecular weight of approximately 2000. With respect to NF1, this is a copolymer containing carboxylic acid functionality and hydroxy functionality, as well as units with neither functionality; NF1 also contains chain transfer agents, such as sodium hypophosphite or organophosphate catalysts. The polymeric polycarboxylic acid may be a homopolymer or copolymer prepared from unsaturated carboxylic acids including, but not necessarily limited to, acrylic acid, methacrylic acid, crotonic acid, isocrotonic acid, maleic acid, cinnamic acid, 2-methylmaleic acid, itaconic acid, 2-methylitaconic acid, α,β-methyleneglutaric acid, and the like. Alternatively, the polymeric polycarboxylic acid may be prepared from unsaturated anhydrides including, but not necessarily limited to, maleic anhydride, itaconic anhydride, acrylic anhydride, methacrylic anhydride, and the like, as well as mixtures thereof. Methods for polymerizing these acids and anhydrides are well-known in the chemical art. The polymeric polycarboxylic acid may additionally comprise a copolymer of one or more of the aforementioned unsaturated carboxylic acids or anhydrides and one or more vinyl compounds including, but not necessarily limited to, styrene, α-methylstyrene, acrylonitrile, methacrylonitrile, methyl acrylate, ethyl acrylate, n-butyl acrylate, isobutyl acrylate, methyl methacrylate, n-butyl methacrylate, isobutyl methacrylate, glycidyl methacrylate, vinyl methyl ether, vinyl acetate, and the like. The molecular weight of the polymeric polycarboxylic acid, and in particular polyacrylic acid polymer, may be is less than 10000 Dalton (Da), less than 5000 Da, or about 3000 Da or less. For example, the molecular weight may be 2000 Da.

Suitable examples of acrylamide and methacrylamide monomers include alkylacrylamide, N-tert-Butylacrylamide, Diacetone acrylamide, N,N-Diethylacrylamide, N,N-Diethylmethacrylamide, N,N-Dimethylacrylamide, N-[3-(Dimethylamino)propyl]methacrylamide, N-Diphenylmethylacryl-amide, N-Ethylacrylamide, N,N'-Hexamethylenebis(methacrylamide), N-Hydroxyethyl acrylamide, N-(Hydroxymethyl)acrylamide, N-(2-Hydroxypropyl)-2-methyl-prop-2-enamide, N-(Isobutoxymethyl)-acrylamide, N-Isopropylacrylamide, N-Isopropylmethacrylamide, Methacrylamide, N-(3-Methoxypropyl)acrylamide, N-Phenylacrylamide, 2-Acrylamido-2-methyl-1-propanesulfonic acid and its salts, 3-(Acrylamido)phenylboronic acid, N-Acryloylamidoethoxyethanol, N-(Triphenylmethyl)-methacrylamide and N-[Tris(hydroxymethyl)methyl]-acrylamide.

Examples of suitable acrylate monomers include 4-Acetoxyphenethyl acrylate, 4-Acryloylmorpholine, Butyl acrylate, 2-(4-Benzoyl-3-hydroxyphenoxy)ethyl acrylate, Benzyl 2-propylacrylate, tert-Butyl acrylate, 2-[[(Butylamino)carbonyl]oxy]ethyl acrylate, 4-tert-Butylcyclohexyl acrylate, 2-Carboxyethyl acrylate, 2-(Diethylamino)ethyl acrylate, Di(ethylene glycol) ethyl ether acrylate, Di(ethylene glycol) 2-ethylhexyl ether acrylate, 2-(Dimethylamino)ethyl acrylate, 3-(Dimethylamino)propyl acrylate, Dipentaerythritol penta-/hexaacrylate, Ethyl acrylate, Ethyl cis-(β-cyano)acrylate, Ethylene glycol dicyclopentenyl ether acrylate, Ethylene glycol methyl ether acrylate, Ethylene glycol phenyl ether acrylate, Ethyl 2-ethylacrylate, 2-Ethylhexyl acrylate, Ethyl 2-propylacrylate, Ethyl 2-(trimethylsilylmethyl)acrylate, Hexyl acrylate, 4-Hydroxybutyl acrylate, 2-Hydroxyethyl acrylate, 2-Hydroxy-3-phenoxypropyl acrylate, Hydroxypropyl acrylate, Isobutyl acrylate, Isodecyl acrylate, Isooctyl acrylate, Lauryl acrylate, Methyl 2-acetamidoacrylate, Methyl acrylate, Methyl 3-hydroxy-2-methylenebutyrate, Octadecyl acrylate, Poly(ethylene glycol) acrylate, Poly(ethylene glycol) diacrylate, Poly(ethylene glycol) methyl ether acrylate, Poly(propylene glycol) acrylate, 3-Sulfopropyl acrylate and salts, Tetrahydrofurfuryl acrylate, 2-Tetrahydropyranyl acrylate, 3-(Trimethoxysilyl)propyl acrylate, 3,5,5-Trimethylhexyl acrylate, 10-Undecenyl acrylate, and Urethane acrylate methacrylate.

Preferred methacrylate monomers may include Allyl methacrylate, Aminoethyl methacrylate, 2-[3-(2H-Benzotriazol-2-yl)-4-hydroxyphenyl]ethyl methacrylate, Benzyl methacrylate, Bis(2-methacryloyl)oxyethyl disulphide, Bis(2-methacryloyl)oxyethyl disulphide, 2-(2-Bromoisobutyryloxy)ethyl methacrylate, 2-(tert-Butylamino)ethyl methacrylate, Butyl methacrylate, tert-Butyl methacrylate, Carbazole-9-ethylmethacrylate, 3-Chloro-2-hydroxypropyl methacrylate, Cyclohexyl methacrylate, 2-(Diethylamino)ethyl methacrylate, Diethylene glycol butyl ether methacrylate, Di(ethylene glycol) methyl ether methacrylate, 2-(Diisopropylamino)ethyl methacrylate, 2-(Dimethylamino)ethyl methacrylate, 2-Ethoxyethyl methacrylate, Ethylene glycol dicyclopentenyl ether methacrylate, Ethylene glycol methacrylate phosphate, Ethylene glycol methyl ether methacrylate, Ethylene glycol phenyl ether methacrylate, Ethylhexyl methacrylate, Ethyl methacrylate, Furfuryl methacrylate, Glycidyl methacrylate, Glycosyloxyethyl methacrylate, Hexyl methacrylate, Hydroxybutyl methacrylate, Hydroxyethyl methacrylate, Hydroxypropyl methacrylate, hydroxypropyl methacrylates, 2-Hydroxypropyl 2-(methacryloyloxy)ethyl phthalate, 2-Hydroxy-3-{3-[2,4,6,8-tetramethyl-4,6,8-tris(propyl glycidyl ether)-2-cyclotetrasiloxanyl]propoxy}propyl meth acrylate, Isobutyl methacrylate, 2-Isocyanatoethyl methacrylate, Isodecyl methacrylate, Lauryl methacrylate, Methacrylic acid N-hydroxysuccinimide ester, Methyl methacrylate, 2-(Methylthio)ethyl methacrylate, mono-2-(Methacryloyloxy)ethyl maleate, mono-2-(Methacryloyloxy)ethyl succinate, 2-N-Morpholinoethyl methacrylate, Naphthyl methacrylate, 2-(2-Oxo-1-imidazolidinyl)ethyl methacrylate, Pentabromophenyl methacrylate, 1,4-Phenylene dimethacrylate, Phenyl methacrylate, Phosphoric acid 2-hydroxyethyl methacrylate ester, Poly(ethylene glycol) behenyl ether methacrylate, Poly(propylene glycol) methacrylate, Propyl methacrylate, 1-Pyrenemethyl methacrylate, Stearyl methacrylate, 3-Sulfopropyl methacrylate and salts, 3-(Trimethoxysilyl)propyl methacrylate, 3,3,5-Trimethylcyclohexyl methacrylate, (Trimethylsilyl)methacrylate, Urethane acrylate methacrylate, Urethane epoxy methacrylate and Vinyl methacrylate.

In principle polyfunctional acrylics are used as crosslinker, and most preferable polyfunctional acrylic compounds are selected from 3-(Acryloyloxy)-2-hydroxypropyl methacrylate, Bis[2-(methacryloyloxy)ethyl] phosphate, Bisphenol A propoxylate diacrylate, 1, 3- or 4-Butanediol diacrylate, 1,3 or 4-Butanediol dimethacrylate, N,N'-(1,2-Dihydroxyethylene)bisacrylamide, Di(ethylene glycol)dimethacrylate, Di(trimethylolpropane) tetraacrylate, Diurethane dimethacrylate, N,N'-Ethylenebis(acrylamide), Ethylene glycol dimethacrylate, Glycerol 1,3-diglycerolate diacrylate, Glycerol dimethacrylate, Glycerol propoxylate triacrylate, 1,6-Hexanediol diacrylate, 1,6-Hexanediol dimethacrylate, 1,6-Hexanediol ethoxylate diacrylate, 1,6-Hexanediylbis[oxy(2-hydroxy-3,1-propanediyl)] bisacrylate, Hydroxypivalyl hydroxypivalate bis[6-(acryloyloxy)hexanoate], Neopentyl glycol diacrylate, Neopentyl glycol propoxylate diacrylate, Pentaerythritol diacrylate monostearate, Pentaerythritol tetraacrylate, Pentaerythritol triacrylate, Poly(propylene glycol) diacrylate, Poly(propylene glycol) dimethacrylate, 1,3,5-Triacryloylhexahydro-1,3,5-triazine, Tricyclo-decanedimethanol diacrylate, Trimethylolpropane ethoxylate methyl ether diacrylate, Trimethylolpropane ethoxylate triacrylate, Trimethylolpropane ethoxylate triacrylate, Trimethylolpropane ethoxylate triacrylate, Trimethylolpropane propoxylate triacrylate, Trimethylolpropane triacrylate, Trimethylolpropane trimethacrylate, Tri(propylene glycol) diacrylate and Tris[2-(acryloyloxy)ethyl] isocyanurate.

The weight ratio on a dry basis of crosslinker capable of undergoing free radical polymerization and free radical initiator for initiation of further cross-linking reactions between saccharide residues and the crosslinker may vary between 2/0.5 and 20/1, preferably 5/1 to 10/1. The weight fraction on a dry basis of crosslinker in the binder composition may advantageously vary from 2-30 w%, preferably from 5-20 w%, more preferably from 5 - 15 w%.

The free radical intiator may comprise inorganic peroxides, advantageously selected from hydrogen peroxide or peroxodisulfates such as the mono- or di-alkali metal or ammonium salts of peroxodisulfuric such as their mono- and di-sodium salts and ammonium salts. Preferred inorganic peroxides may be ammonium or sodium or potasium persulfates or mixtures thereof.

The free radical intiator may further comprise organic peroxides, advantageously selected from alkyl hydroperoxides, for example tert-butyl hydroperoxide, cumyl hydroperoxide, cumene hydroperoxide, and dialkyl or diaryl such as di-tert-butyl or dicumyl peroxide, di-tert-amyl peroxide, benzyl peroxide, butanone peroxide, lauroyl peroxide, 2,5-Bis(tert-butylperoxy)-2,5-dimethylhexane, 1,1-Bis(tert-butylperoxy)-3,3,5-trimethyl- cyclohexane, 1,1-Bis(tert-amylperoxy)cyclohexane, tert-Butyl peroxybenzene, and tert-Butyl peroxy 2-ethylhexyl carbonate.

Azo compounds may also be used as free radical initiator and may generally be selected from azobis (isobutyronitrile) (AIBN), 2,2'-Azobis(2-methylpropionitrile), 4,4'-azobis(4-cyanovaleric acid), 1,1 '-azobis(cyclohexanecarbonitrile), 2,2-azobis(2,4-dimethylvaleronitrile) and 2,2'-azobis(amidinopropyl) dihydrochloride (AIBA).

Suitable oxidizing agents for redox initiators may be selected from the abovementioned peroxides. Corresponding reducing agents may be selected from sulfur compounds with a low oxidation state, such as alkali metal sulfites, for example potassium and/or sodium sulfite, alkali metal such as potassium and/or sodium hydrogen sulfite, alkali metal such as potassium and/or sodium metabisulfite, for example, potassium and/or sodium, alkali metal salts, especially potassium and/or sodium salts of aliphatic sulfinic and alkali metal hydrogen sulfides, such as potassium and/or sodium hydrogen sulfide, salts of polyvalent metals, such as iron(II) sulfate, iron(II) ammonium sulfate, iron (II) phosphate, and ceric ion, such as from ceric ammonium nitrate.

It has been found that the invention binder composition shows less tendency to form dark brown colour binder resins (e.g. Champagne, Tapioca, Vanilla custard, Papyrus, Nude, Wheat, etc.) as is typical for carbohydrate based binder chemistry.

According to a preferred embodiment, the aqueous binder composition comprises polysaccharide cross-linked by an azetidinium crosslinker comprising at least two azetidinium groups, and further comprises a polycarboxylic acid and a free radical initiator for initiation of further cross-linking reactions between saccharide residues and the polycarboxylic acid. Upon curing, such binder composition produces a highly cross-linked resin which shows further improved bond strength.

The binder compositions of the invention and binders produced therefrom are essentially formaldehyde-free (that is comprising less than about 1 ppm formaldehyde based on the weight of the composition) and do not liberate substantial formaldehyde.

The invention compositions may obviously further comprise coupling agents, dyes, antifungal agents, antibacterial agents, hydrophobes and other additives known in the art for such binder applications, as may be appropriate. Silicon-containing coupling agents are typically present in such binders, generally in the range from about 0.1 to about 1 % by weight based on the weight of the solids in the binder composition. These additives are obviously selected such as not to antagonise the adhesive properties of the binder nor the mechanical and other desired properties of the final product comprising such binder composition or binder produced therefrom, and advantageously comply with stringent environmental and health related requirements.

Without being bound by theory, it is believed that curing generates highly crosslinked high molecular weight polymers. These may be analysed by techniques generally known in the art, including determination of molecular weight, and other known techniques.

According to the present invention, the term "binder composition" is not particularly restricted and generally includes any composition which is capable of binding loosely assembled matter, either as such or upon curing. The binder composition is preferably an aqueous non-cured composition comprising the starting materials for forming a thermoset binder resin and possibly reaction product resulting from the reaction or partial reaction of at least part of the relevant starting materials, and possibly additives

As used herein, the term "aqueous" is not particularly limited and generally relates to a solution and/or dispersion which is based on water as a solvent. Said term further includes compositions or mixtures which contain water and one or more additional solvents. An "aqueous binder composition" of the invention may be a solution or partial solution of one or more of said binder components or may be a dispersion, such as an emulsion or suspension.

The solid content of the invention aqueous binder composition may range from 5 to 95 w%, advantageously from 8 to 90 w%, preferably from 10 to 85 w%, based on the weight of the total aqueous binder composition. More specifically, when used as a binder for mineral wool insulation, the solid content of the aqueous binder composition may be in the range from 5 to 25 w%, preferably from 8 to 20 w%, more preferably from 10 to 20 w% or even 12 to 18 w%, based on the weight of the total aqueous binder composition. When used as a binder in wood boards, such as plywood, particle boards, fiber boards, the solid content of the aqueous binder composition may range from 50 to 95 w%, preferably 50 to 90 w%, more preferably 55 to 85 w% or even 60 to 80 w%, based upon the weight of the total aqueous binder composition.

Binder compositions of the invention may further comprise nano-particles derived from inorganic materials such as metal-oxides, preferably MgO, CaO, Al₂O₃ and CaCO₄. Furthermore, nanoclays may be incorporated in the binder formulations. Such nanoclays include, without being limited to, montmorillonite, bentonite, kaolinite, hectorite, and halloysite and other organically-modified nanoclays, and/or mixtures thereof. Such inorganic materials may be present in an amount ranging from 0.1 to 10 w%, preferably 0.1 to 5 w%, of solid content of the total composition.

The components of the invention binder compositions may be transported separately and combined shortly before use in the relevant manufacturing plant. It is also possible to transport the binder composition as such. In the alternative, pre-reacted crosslinked starch may be transported separately from the further cross-linker and possibly free radical initiator; the relevant components may then be combined shortly before use in accordance with the invention.

The binders of the invention may be used to bond a collection of non or loosely assembled matter. The collection of matter includes any collection of matter which comprises fibers selected from mineral fibers, including but not limited to slag wool fibers, stone wool fibers, glass fibers, aramid fibers, ceramic fibers, metal fibers, carbon fibers, polyimide fibers, polyester fibers, rayon fibers, and cellulosic fibers. Further examples of collection of matter include particulates such as coal, cellulosic fibers, wood shavings, saw dust, wood pulp, ground wood, wood chips, wood strands, wood layers, other natural fibers, such as jute, flax, hemp, straw, wood veneers, facings and other particles, woven or non-woven materials. According to a specific embodiment of the invention, the collection of matter is selected from wood particles and mineral fibers.

In one illustrative embodiment, the binder composition of the invention may be used to make insulation products, comprising mineral fibers. In such an application, the fibers are bonded together such that they become organized in a fiber mat which may then be processed into an insulation product. In such an application, the fibers are generally present in an amount ranging from 70 to 99% by weight.

According to another embodiment of the invention, the binder may be used to bond cellulosic particles, such as cellulosic fibers, wood shavings, wood layers or sheets, wood pulp and other materials commonly used to manufacture composite wood boards, including fiber boards, particle boards, oriented strand boards, plywood etc. Such wood boards show nominal thicknesses ranging from 6 to 30 mm and a modulus of Elasticity of at least about 1000 N/mm², bending strength of at least about 5 N/mm² and/or an internal bond strength of at least 0.10 N/mm². In such applications, the binder content in the final wood board may range from about 5 to 30 % wt with respect to the total weight of the wood board notably from 9 to 20%.

According to the invention, the aqueous binder composition may be applied in a manner known per se onto the fiber or particulate or sheet material. The binder composition may preferably be applied by spray application. Other techniques include roll application or mixing and/or tumbling the collection of matter with the binder composition. As water evaporates the binder composition forms a gel that bonds the particulate material together when arranged into a desirable assembly as detailed further herein below. When curing, the reactive binder components are caused to react to form essentially water insoluble macromolecular binder resin. Curing thus imparts increased adhesion, durability and water resistance as compared to uncured binder. Curing may be effected at temperatures between ambient (from about 10 to 25 °C) and up to 280 °C.

According to another aspect, the invention covers a process for the preparation of a bonded assembly of fibrous materials or particulate or sheet materials by application of aqueous binder composition as per the invention, curing and water evaporation. The obtained product may then be further processed in suitable process steps to make intermediate or final products, including but not limited to insulation products or wood boards. More specifically, a process for the manufacturing of an assembly of fibers or cellulosic particles or sheets may comprise (i) the provision of (a) a monosccharide or polysaccharide, (ii) the provision of appropriate amounts of (b) azetidinium cross-linker, (iii) the successive or simultaneous application of (a) and (b), possibly as an aqueous composition comprising (a) and (b) and possibly (a) cross-linked by (b), onto fibrous or cellulosic particulate or sheet material to produce resinated material, and (v) subjecting the resulting resinated material to curing conditions and allowing for evaporation of excess water.

According to a particular embodiment of the process of the invention, the process for the manufacturing of an assembly of fibrous or cellulosic particle or sheet material may comprise the successive or concomitant application onto fibrous or cellulosic particulate or sheet material of an aqueous composition comprising (a) crosslinked with (b) and (c) further cross-linker and (d) free radical initiator, possibly as a single aqueous composition, to produce resinated material, possibly allowing for cross-linking to occur, and subjecting the resulting aqueous composition to curing conditions and allowing for evaporation of excess water.

Copolymerisation reaction of monomer (b) with (a) may be performed at a temperature ranging from ambient temperature (between 10 and 25 °C) to 200 °C, preferably from 40 - 95 °C. Further crosslinking with (c), possibly in the presence of (d) may be effected within the same temperature range. The polymerization reactions may also be effected simultaneously within that same temperature range.

Curing may be effected at a temperature ranging from 90 - 200 °C, preferably higher than 140 °C, more preferably lower than 190 °C, typically between 160 and 180 °C. In the manufacture of wood boards, curing is performed while the material is subjected to pressing.

The invention will be explained in more details in the examples below with reference to the attached Figures, in which:
Figure 1 shows the kinetic evaluation of curing determined at 160°C for binder formulations of 70% T&L Stadex79+20%CA1025+10%DEGDMA+1%Azobis(cyclohexanecarbonitrile) (ABCN); and.
Figure 2 shows the kinetic evaluation of curing determined at 160°C for binder formulations of 70% T&L Stadex79+20%CA1025+10%HEMA+1% azobis(cyclohexanecarbonitrile).
Figures 3A and 3B show the modulus as a function of temperature measured at two different frequencies (1 Hz and 10 Hz), according to the DMA method, of two different binder compositions.
Figures 4A and 4B show the modulus as a function of temperature measured at two different frequencies (1 Hz and 10 Hz), according to the DMA method, of two other binder compositions.

### Materials for Binder Formulation

Starch polymerStadex® 79was purchased from Tate & Lyle. Azetidinium cross-linker CA1025 was obtained from SOLENIS. Hydroxyethyl methacrylate (HEMA), diethyleneglycol dimethacrylate (DEGDMA), and 1,1'-Azobis (cyclohexanecarbonitrile) (ABCN) were purchased from Aldrich.

### Preparation of binder solution compositions

A desired amount of saccharide was dissolved in water and stirred constantly for a sufficient period of time (45 minutes in the case of starch) at room temperature. If required, temperature may be raised up to 80 °C in order to dissolve the saccharide in water. For crosslinking reaction, the required amount of azetidinium cross-linker was added to the saccharide solution. The saccharide was allowed to cross-link by stirring at elevated temperature and/or by adding a small amount of free radical initiator. The obtained mixture was then impregnated on a glass veil which was subjected to curing. Samples were prepared from the cured veil and subjected to different tests as described below.

Part of the saccharide mixture comprising azetidinium cross-linker, obtained above was retained and then combined with HEMA or DEGDMA and free radical initiator ABCN. The obtained aqueous compositions were further stirred continuously at a pre-set temperature to obtain a complex crosslinked polymer network.

The crosslinking of starch with azetidinium cross-linker can take place between various molecules such as amylose to amylose, amylose to amylopectin, or amylopectin to amylopectin. When these linkages are formed, a further crosslinking and/or copolymer reaction can be carried out with polycarboxylic cross-linkers using radical initiator. The Energy required for radical initiation may be adduced by increase of temperature. Other means are available too, like IR, RF or UV radiation. The obtained aqueous composition was applied to a glass veil which was then subjected to curing. Samples were prepared from the cured veil and subjected to different tests as described below.

### Kinetic evaluation of curing

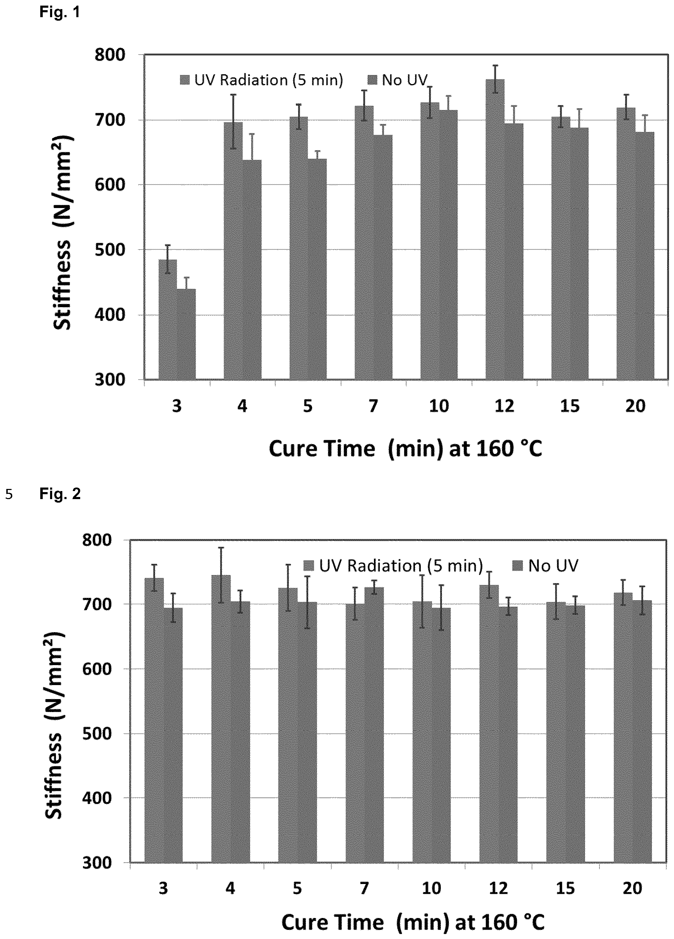

Glass microfiber (Whatman™) GF/A filters were impregnated with binder solution as prepared above prior to curing at various time points at a set temperature. Samples were kept on the top shelf in the oven to avoid high moisture content inside the oven during curing. For each binder solution, samples were cured from 3 minutes to 20 minutes. After curing, each cured sample was cut into an appropriate size with a length (150 mm) and width (20 mm), and then mechanical testing was performed for stiffness and bond strength analysis. Results of the kinetic study or cure rate study are presented in Figures 1 and 2.

### Bond strength analysis using the veil method

Commercial PF (phenol formaldehyde) impregnated (A4 size) glass fiber veils were placed into a muffle furnace oven for 30 minutes at 600°C in order to burnout the PF binder, and were then allowed to cool for 30 minutes. The obtained veil samples were weighted.

Approx. 400 g binder solution samples were poured into dip trays, and the obtained veil samples carefully fully immersed into the relevant binder solutions. The impregnated veils were cured at desired temperature for desired periods of time. Binder content was then measured and bond strength determined as follows.

The bond strength of the relevant cured binder impregnated veils was determined by means of mechanical testing instrument (M350-10CT). For each test a cured binder impregnated A4 veil was cut into 8 equal strips. Each strip was tested separately using a 50 Kg load cell (DBBMTCL-50 kg) at an automated test speed of 10 mm/min controlled by winTest Analysis software. Glass veil tensile plates were attached to the testometric machine in order to ensure a 100 mm gap between plates. Samples were placed vertically in the grippers; and the force was tarred to zero. Various parameters such as maximum load at peak, stress at peak and modulus at peak were evaluated by the software, and data presented as an average of 8 samples with standard deviation. The average maximum load at peak or stress at peak defined as the bond strength.

### Evaluation of weathering Stability

An electronically controlled autoclave system (a steam pressure vessel) was used to sterilise the cured binder veils samples for subsequent strength testing. Cured binder impregnated veils were placed in an autoclave (J8341, Vessel: PVO2626 with associated safety valve, door interlock and integrated pipework) system. Samples were treated at 90% humidity and at a temperature ranging from 40°C to 110°C (full cycle), at a pressure of up to 2.62 bar, for 3 hours. The samples were dried completely in order to ensure no moisture remains onto the veils. The autoclave treated samples were tested for bond strength by means of testometric machine (M350-10CT) described here above, and the results were compared with those of untreated samples.

### Dynamic mechanical analysis (DMA)

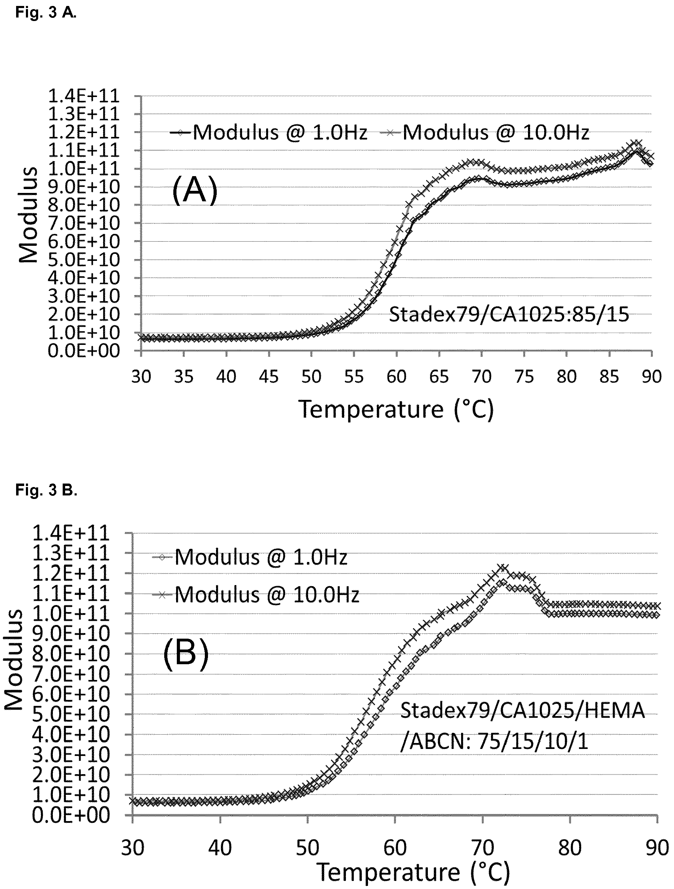

Binder impregnated Whatman™ Filter Papers 3 (Catalog No. 1003-150) with a dimension of 35 mm x 10 mm x 0.36 mm was prepared with 100 grams of 20% solids pre-mixed aqueous binder solution. Binder impregnated filter strips were kept at ambient temperature (-22 °C) for about one hour for initial drying. Each strip was then carefully mounted on DMA sample holder. The DMA tests were performed on a dual cantilever mode using two frequencies (e.g. 1 Hz and 10 Hz) at 1 °C/ min. The modulus was measured as a function of scanning temperature, and the results are presented in Figures 3 -4.

### Example 1:

Determination of binder solid weight loss upon curing at 140°C for 2 hours, as presented in **Table 1.** Aqueous binder compositions (solutions) as prepared above were brought to a solid content of 22.5%. About 12 g of solution was placed into aluminium petri dish, which was kept in an oven at 140°C for 2 hours. Theoretical and experimental solid was measured and solid loss calculated. The binder compositions comprise starch as a polysaccharide, azetidinium compound as a cross-linker, acrylates (HEMA: 2-hydroxyethyl methacrylate, or DEGDMA: di(ethylene glycol)dimethacrylate) as further cross-linker, and ABCN (1,1'-azobis(cyclohexanecarbonitrile) as a radical initiator.

**Table 1.**

| **Binder Materials** | **Composition** | **Solid Loss (%)** |
|---|---|---|
| **Stadex79/CA1025** | **90/10** | **2.4** |
| **Stadex79/CA1025/HEMA/ABCN** | **80/10/10/1** | **0.12** |
| **Stadex79/CA1025** | **85/15** | **1.7** |
| **Stadex79/CA1025/HEMA/ABCN** | **75/15/10/1** | **0.003** |
| **Stadex79/CA1025** | **80/20** | **3.49** |
| **Stadex79/CA1025/HEMA/ABCN** | **70/20/10/1** | **3.49** |
| **Stadex79/CA1025/DEGDMA/ABCN** | **70/20/10/1** | **10.04** |

### Example 2:

The kinetic evaluation of curing was determined at 160°C for binder formulations of Stadex79/CA1025/DEGDMA/ABCN: 70/20/10/1, as presented in **Fig. 1****,** with a standard deviation of five replicates. The binder composition was prepared and the stiffness of corresponding sample was measured according to the procedure described in the previous section.

### Example 3:

The kinetic evaluation of curing determined at 160°C for binder formulations of Stadex79/CA1025/HEMA/ABCN: 70/20/10/1, as presented in **Fig. 2****,** with a standard deviation of five replicates. The binder composition was prepared according to the description given in the previous section.

In examples 2 and 3, some samples are exposed to an additional step, e.g. UV radiation for 5 minutes, in order to enhance curing and the results are compared with corresponding unexposed sample. It appears that the binder compositions show good curing time in the range of 3-5 minutes. Further, curing may be enhanced by UV radiation prior to temperature curing.

### Example 4:

Bond strength analysis of various binder formulations of monosaccharide (e.g. Dextrose monohydrate, DMH), disaccharide (Maltose monohydrate, Maltose MH) and polysaccharide (Maltodextrin, from 3 to 19 saccharide units), and their combination with starch (stadex 79), CA1025, HEMA, with or without ABCN is presented. The mechanical tests were performed on cured (180°C for 15 minutes) veil samples at dry conditions, for both unweathered and weather treated veils, and the results are presented with standard deviation based on eight replicates, as shown in **Table 2.**

**Table 2.**

| **Formulations** | **Unweathered Veil Samples** | | **Weathered Veil Samples** | |
|---|---|---|---|---|
| | Average Bond Strength (N) | STDEV (+/-) | Average Bond Strength (N) | STDEV (+/-) |
| DMH/CA1025: 80/20 | 65.64 | 13.61 | 68.61 | 11.13 |
| DMH/CA1025/HEMA/ABCN: 70/20/10/1 | 70.17 | 17.09 | 70.45 | 7.23 |
| MaltoseMH/CA1025: 80/20 | 89.17 | 17.95 | 75.19 | 16.68 |
| Maltose MH/CA1025/HEMA/ABCN: 70/20/10/1 | 82.63 | 11.52 | 70.56 | 9.71 |
| Maltodextrin/CA1025: 80/20 | 104.31 | 7.62 | 104.67 | 8.39 |
| Maltodextrin/CA1025/HEMA/ABCN: 70/20/10/1 | 100.40 | 9.70 | 100.75 | 7.45 |
| Stadex79/DMH/CA1025/HEMA/ABCN: 50/20/20/10/1 | 109.13 | 14.10 | 102.04 | 14.19 |
| Stadex79/MaltoseMH/CA1025/HEMA/ABCN : 50/20/20/10/1 | 103.49 | 10.06 | 97.57 | 5.40 |
| Stadex79/Maltodextrin/CA1025/HEMA/ABCN: 50/20/20/10/1 | 112.16 | 5.94 | 99.48 | 8.53 |

### Example 5:

Bond strength analysis of various binder formulations comprising starch, azetidinium cross linker (CA1025), with and without acrylate (HEMA) and radical initiator (ABCN or Ce⁴⁺) in the compositions, was performed. The bond strength is defined as the maximum load at which the veil impregnated cured samples breaks down. Results are shown for unweathered and weather treated veil samples. These impregnated veils were cured at a desired temperature (e.g. 180 °C) for 15 minutes and mechanical tests were performed at dry conditions. The results are presented with standard deviation based on sixteen replicates, as shown in **Table 3**. The invention compositions show high bond strength for all samples. It is noted that the bond strength either remained in the same range within the statistical deviation or improved after weather treatment.

**Table 3.**

| **Formulations** | **Unweathered Veils Samples** | | **Weather Treated Veils Samples** | |
|---|---|---|---|---|
| | Average Bond Strength (N) | STDEV (+/-) | Average Bond Strength (N) | STDEV (+/-) |
| Stadex79/CA1025: 92.5/7.5 | 81.27 | 5.70 | 91.82 | 5.28 |
| Stadex79/CA1025: 90/10 | 84.81 | 7.84 | 95.90 | 9.52 |
| Stadex79/CA1025: 87.5/12.5 | 95.09 | 7.46 | --- | --- |
| Stadex79/CA1025/Ce⁴⁺: 87.5/12.5/1 | 94.01 | 9.24 | --- | --- |
| Stadex79/CA1025: 85/15 | 102.79 | 14.36 | --- | --- |
| Stadex79/CA1025/ Ce⁴⁺: 85/15/1 | 99.84 | 13.08 | --- | --- |
| Stadex79/CA1025: 80/20 | 92.42 | 9.65 | 95.17 | 7.83 |
| Stadex79/CA1025/HEMA: 70/20/10 | 94.67 | 9.55 | 98.32 | 13.29 |
| Stadex79/CA1025/HEMA/ ABCN: 82.5/7.5/10/1 | 84.39 | 6.59 | 92.06 | 8.53 |
| Stadex79/CA1025/HEMA/ ABCN: 80/10/10/1 | 94.58 | 9.39 | 98.97 | 9.99 |
| Stadex79/CA1025/HEMA/ ABCN: 70/20/10/1 | 100.08 | 14.36 | 90.62 | 5.24 |

### Example 6:

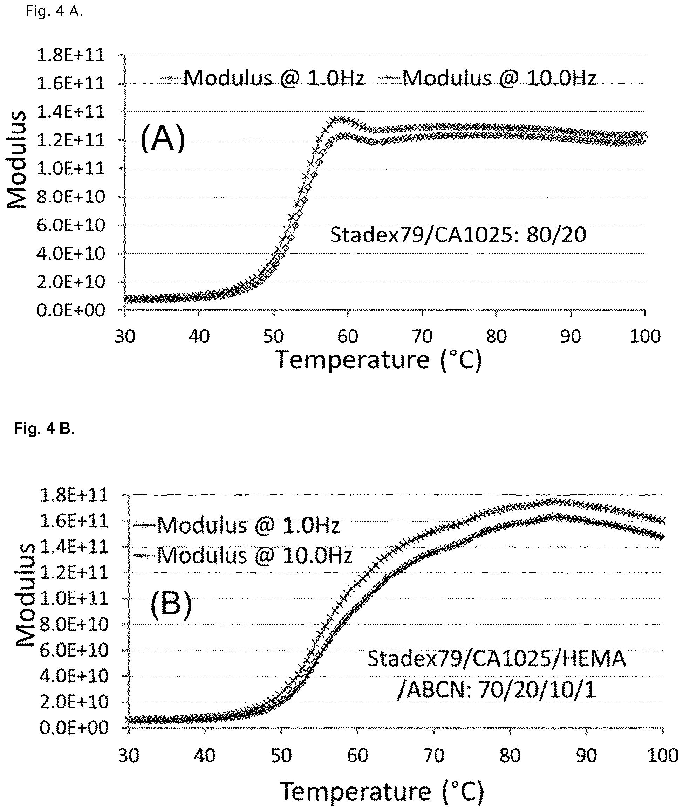

Modulus analysis by DMA was carried out for binder formulations comprising Stadex79/CA1025:85/15, Stadex79/CA1025/HEMA/ABCN: 75/15/10/1, as presented in Figure 3A and Figure 3B, respectively. Results show a significantly higher modulus in the case of the second formulation (Fig 3B) as compared to that of the first formulation (Fig 3A). Similar results were obtained for the composition comprising Stadex79/CA1025/HEMA/ABCN in the ratio of 70/20/10/1 (Fig. 4B) as compared to that of Stadex79/CA1025 in the ratio 80/20 (see Fig 4 A).

### Example 7:

The experiment of Example 5 was repeated with different starches, except that the curing temperature was 190 °C and the curing time was 10 minutes. The data obtained is shown in the Tables below.

| | Veil bond strength | | | |
|---|---|---|---|---|
| Formulations | Av. Dry (N) | StDev +/- | Av. Wet (N) | StDev +/- |
| Stadex125/CA1025: 80/20 | 98.46 | 8.12 | 77.72 | 12.44 |
| Stadex125/CA1025: 75/25 | 95.90 | 10.47 | 85.33 | 6.44 |
| Stadex125/CA1025: 70/30 | 94.37 | 7.88 | 85.82 | 6.21 |
| Stadex125/CA1025: 65/25/10/1 | 100.38 | 5.96 | 83.69 | 6.45 |

| | Veil bond strength | | | |
|---|---|---|---|---|
| Formulations | Av. Dry (N) | StDev +/- | Av. Wet (N) | StDev +/- |
| Stadex201/CA1025: 80/20 | 107.87 | 14.38 | 97.57 | 5.86 |
| Stadex201/CA1025: 75/25 | 109.39 | 12.91 | 104.68 | 7.22 |
| Stadex201/CA1025: 70/30 | 118.29 | 6.80 | 92.43 | 3.12 |
| Stadex201/CA1025: 65/25/10/1 | 95.22 | 4.23 | 85.63 | 10.44 |

| | Veil bond strength | | | |
|---|---|---|---|---|
| Formulations | Av. Dry (N) | StDev +/- | Av. Wet (N) | StDev +/- |
| Ethylex2005S/CA1025: 80/20 | 101.02 | 9.07 | 93.69 | 12.13 |
| Ethyles2005S/CA1025: 75/25 | 98.31 | 5.57 | 83.41 | 9.31 |
| Ethyles2005S /CA1025: 70/30 | 97.85 | 5.26 | 91.19 | 6.94 |
| Ethyles2005S /CA1025: 65/25/10/1 | 90.27 | 7.70 | 91.12 | 8.97 |

| | Veil bond strength | | | |
|---|---|---|---|---|
| Formulations | Av. Dry (N) | StDev +/- | Av. Wet (N) | StDev +/- |
| Ethylex2040/CA1025: 80/20 | 112.27 | 9.55 | 89.37 | 8.97 |
| Ethyles2040/CA1025: 75/25 | 112.06 | 8.42 | 76.99 | 8.52 |
| Ethyles2040/CA1025: 70/30 | 102.21 | 8.65 | 85.13 | 8.34 |
| Ethyles2040/CA1025: 65/25/10/1 | 93.58 | 7.11 | 80.64 | 5.49 |

| | Veil bond strength | | | |
|---|---|---|---|---|
| Formulations | Av. Dry (N) | StDev +/- | Av. Wet (N) | StDev +/- |
| Ethylex2095/CA1025: 80/20 | 91.62 | 3.99 | 87.38 | 8.07 |
| Ethyles2095/CA1025: 75/25 | 101.25 | 14.15 | 79.37 | 5.64 |
| Ethyles2095/CA1025: 70/30 | 109.23 | 7.76 | 82.57 | 9.70 |
| Ethyles2095/CA1025: 65/25/10/1 | 109.62 | 5.81 | 7574 | 6.85 |

The above examples make use of commercially available starches as mentioned above. As shown below by way of viscosity measurements, Stadex starches are low molecular weight starches, Ethylex 2040 and 2095 starch are higher molecular weight starches.

**Table 6: Viscosity measurement of modified starches.**

| | | | | |
|---|---|---|---|---|
| Viscosity was measured using DV-II + Pro Viscometer Brookfield LV. All measurements were done at a constant temperature. | | | | |

| Sample Name | Concentration (wt.%) | Temp. (°C) | Viscosity Value (cps) | Comments |
|---|---|---|---|---|
| Stadex 79 | 20 | 35 | 6.67 | |
| Stadex 125 | 20 | 35 | 8.40 | |
| Stadex 201 | 20 | 35 | 4.17 | |
| Starch Ethylex 2005S | 15 | 35 | 67 | |
| Starch Ethylex 2005S | 20 | 35 | 275 | |
| Starch Ethylex 2040 | 20 | 35 | xxx | The viscosity above the highest detection limit of the machine. |
| Starch Ethylex 2040 | 15 | 35 | 9900 | Highly viscose. |
| Starch Ethylex 2095 | 20 | 35 | xxx | The viscosity above the highest detection limit of the machine. |
| Starch Ethylex 2095 | 15 | 35 | xxx | The viscosity above the highest detection limit of the machine. |
| Starch Ethylex 2095 | 10 | 70 | >101,000 | Highly viscose (below 70 °C machine did not detect). |

## Claims

1. An assembly of matter selected from insulation products, such as mineral wool mats, and composite wood boards, comprising mineral fibers or cellulosic particle or sheet material, bonded together by a curable binder composition comprising a monosaccharide and an azetidinium crosslinker, or by a binder obtained by subjecting to curing conditions an aqueous curable binder composition comprising a monosaccharide and an azetidinium crosslinker.

2. The assembly of matter of claim 1 wherein the azetidinium cross-linker is made up of at least two monomeric units, preferably a polyazetidinium of formula 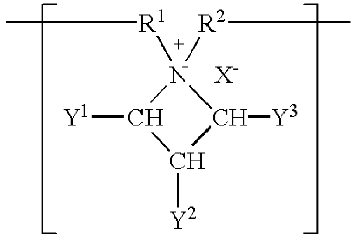 wherein R¹ may be C₁ - C₂₅ alkanediyl, preferably C₁ - C₁₀ alkanediyl or C₁ - C₅ alkanediyl, possibly substituted with a hydroxyl group, carboxyl functional group or an amine,
R² may be independently R₁ or -R³-NH-C(O)-R⁴-, with R³ and R⁴ being independently C₁ - C₂₅ alkanediyl, preferably C₁ - C₁₀ alkanediyl or C₁ - C₅ alkanediyl,
Y¹ and Y³ being H or a C₁-C₅ alkyl group, possibly substituted with a hydroxyl group, an amine or a carboxyl group,
Y² being OH or independently Y¹,
X⁻ being a halogen counter ion;
more particularly the product coded CA1025.

3. The assembly of matter of any of claims 1 to 2 wherein the weight ratio on a dry basis of monosaccharide to azetidinium cross-linker is comprised between 99/1 to 60/40, preferably between 98/2 to 70/30, more preferably between 95/5 to 75/25.

4. The assembly of matter of any of claims 1 to 3 **characterized by** one or more of the following features:
4.5 wherein the binder composition comprises monosaccharide cross-linked with azetidinium cross-linker and further comprises a crosslinker capable of undergoing radical polymerization and possibly a free radical initiator;
4.6 wherein the binder composition comprises monosaccharide cross-linked with azetidinium cross-linker and further comprises a crosslinker capable of undergoing radical polymerization and possibly a free radical initiator, and the crosslinker capable of undergoing radical polymerization is selected from polycarboxylic acid, acrylamide, methacrylamide, acrylate, acrylic acids and their salts, acrylonitrile, bisphenil acrylics, carbohydrate monomers, fluorinated acrylics, maleimide and mixtures thereof, for initiation of further cross-linking reactions between saccharide residues and the crosslinker.
4.7 wherein the binder composition comprises monosaccharide cross-linked with azetidinium cross-linker and further comprises a crosslinker capable of undergoing radical polymerization and the further cross-linker is present in the range between 1 - 40 wt.% of total dry weight of the binder composition.
4.8 wherein the binder composition comprises monosaccharide cross-linked with azetidinium cross-linker and further comprises a crosslinker capable of undergoing radical polymerization and possibly a free radical initiator selected from inorganic peroxides, organic peroxides, reducing agents, azo compounds, redox initiators, photo-initiators, and mixtures thereof, and is contained in the binder composition in the range of 0.05 - 5 % by weight, preferably higher than 1%, preferably lower than 2 % by weight, based on dry weight of the binder composition.

5. The assembly of matter of any of the preceding claims further comprising coupling agents, dyes, antifungal agents, antibacterial agents, hydrophobes and other additives known in the art for such binder applications, such as nano-particles derived from inorganic materials such as metal-oxides, preferably MgO, CaO, Al₂O₃ and CaCO₄ or nanoclays, such as montmorillonite, bentonite, kaolinite, hectorite, and halloysite and other organically-modified nanoclays, and mixtures thereof.

6. A process for the manufacture of a product which comprises a bonded assembly of fibrous material or cellulosic particle or sheet material, comprising (i) the provision of (a) a monosaccharide , (ii) the provision of appropriate amounts of (b) azetidinium cross-linker, (iii) the successive or simultaneous application of (a) and (b), possibly as an aqueous composition comprising (a) and (b) and possibly (a) cross-linked by (b), onto fibrous or cellulosic particulate or sheet material to produce resinated material, and (v) subjecting the resulting resinated material to curing conditions and allowing for evaporation of excess water.

7. The process of claim 6 comprising the successive or concomitant application onto fibrous or cellulosic particulate or sheet material of an aqueous composition comprising (a) crosslinked with (b) and (c) a cross-linker capable of undergoing radical polymerization and possibly (d) free radical initiator, possibly as a single aqueous composition, to produce resinated material, possibly allowing for cross-linking to occur, and subjecting the resulting aqueous composition to curing conditions and allowing for evaporation of excess water.

8. The process of claim 6 or 7 **characterized by** one or more of the following features:
8.12 wherein the cross-linking between (a) and (b) and possibly the further crosslinking with (c), possibly in the presence of (d) is effected at a temperature ranging from ambient temperature (from 10 to 25 °C) to 200 °C, preferably from 40 - 95 °C., during a required period of time to generate the desired cross-linked material;
8.13 wherein the cross-linking between (a) and (b) is effected by radical initiation;
8.14. wherein the obtained resinated material is subjected to radiation followed by temperature curing;
8.15. wherein temperature curing is effected at a temperature ranging from 90 - 200 °C, preferably higher than 140 °C, more preferably lower than 190 °C, typically between 160 and 180 °C.

9. An aqueous binder composition comprising monosaccharide cross-linked with azetidinium cross-linker, and a crosslinker capable of undergoing radical polymerization, and possibly a free radical initiator.

10. The aqueous binder composition of claim 9 wherein the crosslinker capable of undergoing radical polymerization is selected from polycarboxylic acid, acrylamide, methacrylamide, acrylate, acrylic acids and trheir salts, acrylonitrile, bisphenil acrylics, carbohydrate monomers, fluorinated acrylics, maleimide and mixtures thereof,

11. The aqueous binder composition of any of claims 9 - 10 wherein the azetidinium cross-linker is made up of at least two monomeric units, preferably a polyazetidinium of formula 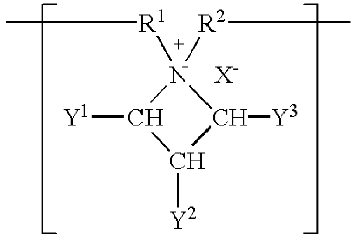 wherein R¹ may be C₁ - C₂₅ alkanediyl, preferably C₁ - C₁₀ alkanediyl or C₁ - C₅ alkanediyl, possibly substituted with a hydroxyl group, carboxyl functional group or an amine,
R² may be independently R¹ or -R³-NH-C(O)-R⁴-, with R³ and R⁴ being independently C₁ - C₂₅ alkanediyl, preferably C₁ - C₁₀ alkanediyl or C₁ - C₅ alkanediyl,
Y¹ and Y³ being H or a C₁-C₅ alkyl group, possibly substituted with a hydroxyl group, an amine or a carboxyl group,
Y² being OH or independently Y¹,
X⁻ being a halogen counter ion;
more particularly the product coded CA1025.

12. The aqueous binder composition of any of claims 9 - 11 wherein the initiator is selected from inorganic peroxides, organic peroxides, reducing agents, azo compounds, redox initiators, photo-initiators, and mixtures thereof, and is contained in the binder composition in the range of 0.05 - 5 % by weight, preferably higher than 1%, preferably lower than 2 % by weight, based on dry weight of the binder composition.

13. The assembly of particles according to any of claims claim 1 - 5 being a composite wood board, such as wood fiber board, wood particle board, or plywood.
